# FASCICULE DE BREVET EUROPEEN

(11) **EP 3 449 691 B1**
(45) Date de publication et mention de la délivrance du brevet: **09.04.2025**
(21) Numéro de dépôt: 17725303.6
(22) Date de dépôt: 24.04.2017
(51) Int. Cl.: H05B 6/12, A47B 77/08, F24C 15/30, F24C 15/10

(54) **ARTICLE VITROCÉRAMIQUE**
GLASKERAMISCHER ARTIKEL
VITREOUS CERAMIC ITEM

(30) Priorité: 25.04.2016 FR 1653645
(43) Date de publication de la demande: 06.03.2019
(73) Titulaire: Eurokera S.N.C., 02400 Château-Thierry (FR)
(72) Inventeur: ROUX, Nicolas, 02400 Chateau-Thierry (FR); VILATO, Pablo, 75014 Paris (FR); DEMOL, Franck, 51100 Reims (FR); DEBREYER, Grégory, 77140 Montcourt Fromonville (FR); RAVEL, Michaël, 02850 Barzy Sur Marne (FR); GOLDENBERG, Virginie, 93300 Aubervilliers (FR)
(74) Mandataire: Saint-Gobain Recherche
(86) Numéro de dépôt international: PCT/FR2017/050965
(87) Numéro de publication internationale: WO 2017/187072

(56) Documents cités:
- EP-A1- 0 751 354
- EP-A1- 1 627 579
- EP-A1- 2 469 190
- WO-A1-2008/114426

## Description

La présente invention concerne un article formé d'une plaque (en) vitrocéramique, cette plaque étant en particulier destinée à servir de plan de travail ou de surface (notamment horizontale) de meuble, cette plaque étant en particulier de grandes dimensions (l'article étant par exemple le mobilier ainsi formé), l'article comprenant également des éléments utiles à son fonctionnement ou au fonctionnement de la plaque, par exemple des éléments de chauffage, des composants électroniques, etc.

La vitrocéramique est notamment utilisée depuis plusieurs années pour former des plaques de cuisson en vitrocéramique, lesquelles rencontrent un grand succès auprès des ménagistes, fabricants d'électroménagers et utilisateurs de par leur aspect attractif et leur facilité de nettoyage.

Les plans de travail sont quant à eux généralement réalisés en d'autres matériaux, par exemple le bois, le quartz, le Corian^{®}, etc, cependant l'utilisation de plaques vitrocéramiques pour réaliser ces plans de travail, bien qu'induisant des problématiques spécifiques à ce matériau, s'avère particulièrement intéressante.

Une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Chaque produit en vitrocéramique est le résultat d'études spécifiques et de nombreux essais, étant donné qu'il est très délicat de faire des modifications sur des vitrocéramiques et/ou sur leur procédé d'obtention sans risquer un effet défavorable sur les propriétés recherchées : par exemple, dans son usage habituel comme plaque de cuisson, une plaque vitrocéramique doit généralement présenter une transmission dans le domaine du visible à la fois suffisamment basse pour masquer les éléments de chauffage sous-jacents au repos et suffisamment élevée pour que l'utilisateur puisse détecter visuellement lesdits éléments en état de marche dans un but de sécurité et/ou puisse lire des afficheurs éventuels. Les plaques vitrocéramiques doivent également présenter une résistance mécanique suffisante telle que requise pour leur utilisation, notamment et à plus forte raison quand elles sont de grande taille, en particulier, dans le domaine de l'électroménager, doivent présenter une bonne résistance (définie par exemple selon la norme EN 60335-2-6 dans leur usage habituel comme plaques de cuisson) à la pression, aux chocs (support et chute d'ustensiles, etc), etc.

Afin de remplir la ou les fonctions qui lui sont attribuées, la plaque en vitrocéramique est généralement munie d'accessoires ou éléments supplémentaires (décoratifs ou fonctionnels) requis pour son usage final (par exemple d'éléments de chauffage ou d'un bandeau de commande pour les plaques de cuisson), en particulier de composants électroniques, lesdits éléments ou accessoires étant généralement fixés sur la plaque de façon définitive, par encastrement dans un logement de la plaque prévu à cet effet, et/ou collage éventuel dans une zone distincte de celle des zones de chauffe éventuelles. La position et le choix des accessoires sont ainsi fixés à l'avance, et une fois la plaque et ses accessoires montés, si un élément est défectueux, le démontage de l'ensemble à l'aide d'outils spécifiques doit être opéré, voire la réparation implique de changer toute la plaque ou l'ensemble. Le document EP2469190 A1 divulgue un article selon le préambule de la revendication 1.

L'opération de démontage est rendue d'autant plus compliquée que les plaques vitrocéramiques sont lourdes, en particulier les plaques de grandes dimensions, et sont généralement fixées à leur support, en intercalant un joint le cas échéant pour des questions de sécurité et d'étanchéité. Par conséquent, l'utilisation de la vitrocéramique combinée à des composants électroniques pour réaliser des plans de travail ou des surfaces de meubles interactifs et/ou multi-usages pose des problèmes en terme de montage ou démontage des composants, notamment lorsqu'il s'agit de réaliser des installations à caractère modulable, toute intervention étant particulièrement complexe et pouvant entrainer un changement de l'ensemble en cas d'élément défectueux..

La présente invention a donc cherché à mettre au point un article, tel qu'un plan de travail ou un meuble, formé d'au moins une plaque vitrocéramique et d'éléments nécessaires à son fonctionnement (en particulier d'équipements électroniques), notamment cachés par ladite plaque au sein dudit article lors de son fonctionnement, cet article permettant un entretien plus facile de ceux de ses constituants nécessaires à son fonctionnement qui sont normalement cachés par ladite plaque en fonctionnement, sans recourir à des outils spécifiques et sans devoir changer la plaque.

Ce but a été atteint par l'article selon l'invention, cet article étant en particulier un plan de travail ou meuble, ou un autre appareil à usage notamment domestique et/ou mobilier, cet article étant formé d'au moins une plaque vitrocéramique et d'éléments pour son fonctionnement (la plaque étant par exemple destinée à être équipée de composants électroniques en vue de différents usages, et pouvant en particulier couvrir ou recevoir des éléments de chauffage), au moins l'un desdits éléments étant positionné sur un support bi- ou tridimensionnel (tel qu'un plateau ou un caisson) mobile couplé à un dispositif de sécurité (ou de protection), tel qu'un coupe-circuit ou un contacteur ou un interrupteur, de sorte que, dans une première position du support (position de fonctionnement du ou des éléments), ledit élément (positionné sur le support) se trouve en regard d'une face de la plaque (en particulier sa face inférieure) à une distance (perpendiculairement à ladite face et entre ladite face et l'extrémité la plus proche de l'élément) d'au plus 10 cm de la plaque et peut être activé, et dans une seconde position du support, obtenue par mouvement de celui-ci, dans laquelle au moins l'une des extrémités (ou l'un des bords) du support est déplacé(e) d'une distance (ou se trouve à une distance) d'au moins 2 mm par rapport à la plaque perpendiculairement à celle-ci (en particulier verticalement), et est déplacée d'une distance (ou se trouve à une distance) d'au moins 5 cm (perpendiculairement ou non par rapport à la plaque) par rapport à sa première position (ou position qu'elle occupe dans la première position du support), ledit élément est désactivé (avantageusement par l'action du dispositif de sécurité).

De préférence, plusieurs éléments (ou au moins une partie de l'ensemble des éléments) utiles au fonctionnement de la plaque ou de l'article, voire tous les éléments permettant le fonctionnement de la plaque ou de l'article, sont positionnés (ou placés) sur le support mobile de sorte que, dans une première position (première et seconde désignant des positions relatives, non nécessairement dans cet ordre, d'autres positions intermédiaires ou supplémentaires pouvant en outre éventuellement être prévues) du support (position de fonctionnement des éléments et/ou de la plaque), lesdits éléments se trouvent en regard d'une face de la plaque (en particulier sa face inférieure) à une distance (perpendiculairement à ladite face et entre ladite face et l'extrémité la plus proche de chacun desdits éléments) d'au plus 10 cm de la plaque et peuvent être activés, et dans une seconde position du support, obtenue par mouvement de celui-ci, dans laquelle au moins une des extrémités (ou l'un des bords) du support est déplacée de, ou se trouve à, une distance d'au moins 2 mm par rapport à la plaque perpendiculairement à celle-ci, et est déplacée de, ou se trouve à, une distance d'au moins 5 cm par rapport à sa première position, au moins une partie (voire la totalité) desdits élément sont désactivés (avantageusement par l'action du dispositif de sécurité), certains éléments, présentant peu de danger (par exemple une tablette ou une source lumineuse dont la tension nécessaire au fonctionnement est inférieure à 12V en courant alternatif ou à 30 V en courant continu), et branchés sur des circuits électriques indépendants de ceux concernés par le dispositif de sécurité, pouvant le cas échéant rester actifs.

Le support mobile peut se présenter notamment sous forme d'un plateau, ou d'un caisson ou boitier (en particulier ouvert), par exemple dans un matériau tel que de l'aluminium, de l'inox du verre, du stratifié, etc, ce support étant situé préférentiellement sous la plaque et pouvant occuper une surface correspondant à tout ou partie de celle de la face de la plaque en regard de laquelle elle se trouve dans la première position du support, le support étant généralement disposé parallèlement ou approximativement parallèlement à ladite face de la plaque dans ladite première position. Le support peut être mobile en translation et/ou rotation, horizontalement et/ou verticalement, de façon à l'éloigner au moins en partie de la plaque dans la seconde position mentionnée selon l'invention, le support étant en outre couplé à un dispositif de sécurité, ce dispositif étant en particulier un coupe circuit ou formé d'au moins un coupe circuit, manuel ou automatique, déclenché notamment par le mouvement du plateau et pouvant se trouver, ou être activé, à divers endroits de la course du plateau, selon le dispositif utilisé et le degré de sécurité recherché, afin de permettre un accès facilité et sécurisé aux éléments, permettant le fonctionnement de la plaque ou de l'article, positionnés sur le support. Le dispositif de sécurité peut également être, par exemple formé d'un contacteur se désamorçant lorsque l'on bouge le support empêchant ainsi l'utilisation normale du système électrique.

Le support est préférentiellement mobile en rotation et/ou suivant au moins deux directions, par exemple verticalement et horizontalement, afin d'éloigner à la fois les éléments verticalement de la plaque et de les déporter (ou décaler) horizontalement par rapport à leur position première, en particulier en leur permettant le cas échéant de sortir de l'espace délimité par la plaque et sous lequel ils se trouvent dans leur position de fonctionnement (première position du support), ces éléments étant en particulier toujours cachés par la plaque dans leur position de fonctionnement et pouvant ainsi être extraits de l'enceinte de l'article (en particulier, le cas échéant, de l'enceinte du meuble fermé ou en position compacte) et devenir visibles et accessibles quand une intervention ou un remplacement doit être effectué sur au moins l'un d'entre eux.

Le mouvement du support peut se faire par exemple suivant un axe de rotation (par exemple situé le long d'un bord opposé à celui destiné à être écarté de la plaque et par lequel il est prévu l'accès d'un opérateur aux éléments situés sur le support, comme illustré ultérieurement, ou localement autour d'un axe approprié, à la façon par exemple d'une trappe sous la plaque, etc.) ou suivant des rails (de guidage) ou glissières, le cas échéant de forme(s) permettant un mouvement vertical et horizontal, par exemple des rails de forme approximativement en S, comme illustré ultérieurement, ou suivant une ou des crémaillères, etc. Le support peut par exemple dans ce dernier cas se présenter sous forme d'un tiroir ou faire partie d'un tiroir ou se trouver au sein d'un tiroir, ce support coulissant le long de glissières et pouvant être extrait en totalité ou en partie du meuble ou article dans lequel il se trouve, par exemple en tirant sur des poignées situées sur la paroi externe apparente du tiroir, comme illustré ultérieurement.

Dans la première position du support, les éléments situés sur le support se trouvent en regard de la face inférieure de la plaque à une distance d'au plus 10 cm, et de préférence d'au plus 4 cm, de la plaque (mesurée perpendiculairement à ladite face et entre ladite face et l'extrémité la plus proche de chaque élément), et de façon particulièrement préférée à une distance de moins de 1 cm, avantageusement inférieure à 5 mm, les éléments pouvant se trouver au contact de la plaque (par exemple des inducteurs) ou à faible distance, par exemple d'au moins 1 mm ou quelques millimètres, de celle-ci, selon les éléments considérés, cette première position permettant notamment à ces éléments d'assurer leurs fonctions; dans la seconde position du support, au moins l'une de ses extrémités, voire l'ensemble du support, est déplacé(e) de, ou se trouve à, une distance d'au moins 2 mm, et de préférence d'au moins 1 cm, par rapport à la plaque perpendiculairement à celle-ci (afin notamment que le mouvement du support n'endommage pas, en particulier ne raye pas, la plaque), et est déplacée de (dans un même mouvement que celui pour écarter le support de la plaque ou dans un second mouvement, simultané ou consécutif), ou se trouve à, une distance d'au moins 5 cm, en particulier d'au moins 10 cm, de façon particulièrement préférée d'au moins 15 cm, notamment d'au moins 50 cm, par rapport à sa première position (cette distance étant mesurée entre les deux positions), cette distance correspondant également de préférence à au moins 30%, voire au moins 100%, de la longueur ou profondeur de la plaque, de façon notamment à ce que les éléments soient bien dégagés de la plaque et accessibles. En particulier, dans la seconde position, au moins l'une des extrémités du support, voire l'ensemble du support, est déplacée de, ou se trouve à, une distance d'au moins 10 cm de sa première position verticalement, par exemple par rotation ou abaissement du support, et/ou est déplacée de, ou se trouve à une distance d'au moins 2 mm de la plaque verticalement et d'au moins 5 cm, en particulier d'au moins 10 cm, de façon particulièrement préférée d'au moins 15 cm, notamment d'au moins 50 cm, horizontalement par rapport à sa première position, par exemple par abaissement puis translation du support, le déplacement s'étant fait notamment par translation ou par rotation, avec notamment dans ce dernier cas un angle d'au moins 2.5°, notamment d'au moins 10°, ou d'au moins 20°, voire d'au moins 30°, en particulier d'au moins 45°, ou d'au moins 60°, par rapport à la première position.

Le dispositif de sécurité (ou de protection) est préférentiellement formé d'au moins un composant ou appareil permettant de couper l'électricité alimentant au moins une partie des éléments situés sur le support (tels que le cas échéant, les éléments de chauffage pour éviter toutes brulures) quand le support passe de la première à la seconde position et/ou en cas de court-circuit électrique, et se présente par exemple sous la forme d'un appareil (coupe-circuit, contacteur, interrupteur, etc.), à action mécanique ou électrique, intégré, au moins pour une partie dudit appareil ou dispositif, au(x) système(s) électrique(s) à couper (l'autre ou une autre partie se trouvant notamment la cas échéant sur le support) et déclenché par exemple par le mouvement du support.

Le cas échéant l'article peut également comprendre (ou la plaque peut être également couplée à) un dispositif de sécurité (indépendant ou non du dispositif de sécurité précité) pour empêcher le pincement de l'opérateur ou un mouvement trop brutal du support lors de son actionnement, tel qu'un frein ou un amortisseur, ou l'article peut comprendre ou la plaque être couplée à (un dispositif de sécurité intégrant) une ou plusieurs butées ou un ou plusieurs loquets ou un ou plusieurs dispositifs ou systèmes de blocage ou verrouillage quand le support est dans (au moins) l'une de ses positions d'utilisation (en particulier sa première et/ou seconde position) afin d'assurer au besoin une stabilité suffisante du support dans cette position ou dans chaque position.

Le support (ou l'article selon l'invention) peut également prévoir d'autres composants, tels qu'une ou des poignées pour le manipuler, l'article pouvant en outre être muni de divers éléments (positionnés sur le support ou non) comme détaillé par la suite. Le cas échéant, le support peut aussi être en plusieurs parties, manœuvrables chacune indépendamment ou non.

L'article selon l'invention permet un entretien plus facile de ceux de ses constituants nécessaires à son fonctionnement qui sont cachés par la plaque vitrocéramique formant une de ses surfaces, cet entretien pouvant se faire en toute sécurité, sans nécessiter de démontage fastidieux et sans impliquer le remplacement d'éléments extérieurs tels que la plaque, et permettant ainsi un gain de temps, tout en évitant des frais excessifs en cas de disfonctionnement des éléments. De plus, la solution proposée évite de devoir manipuler et déplacer la plaque vitrocéramique qui est particulièrement lourde, notamment lorsqu'elle est de grandes dimensions, et évite tout endommagement de ladite plaque ou des éléments nécessaires à son fonctionnement, tout en permettant auxdits éléments d'exercer leur fonction en position de fonctionnement en combinaison avec la plaque (tel que le chauffage, l'éclairage de zones de chauffe ou l'affichage de données par lesdits éléments).

La plaque vitrocéramique occupe avantageusement l'essentiel (plus de 50% de la surface de la face où elle se trouve, de préférence plus de 80%, en particulier plus de 90%) voire toute la surface d'une face, en particulier la face supérieure, de l'article selon l'invention, offrant une surface continue pouvant servir de support à différents articles selon l'usage envisagé de ladite plaque ou dudit article. Le cas échéant, elle repose, généralement à sa périphérie, sur au moins un caisson ou un ou des pieds supports, sans qu'il soit nécessaire le cas échéant d'intercaler un joint (ou sans joint intercalaire) entre ces parties (contrairement aux dispositifs dans lesquels la plaque vitrocéramique n'occupe qu'une partie de cette surface dans laquelle elle est encastrée). La plaque vitrocéramique est également avantageusement monolithique (ou monobloc ou d'un seul tenant), et essentiellement plane (à l'exception des déformations éventuelles localisées opérées sur le substrat à des fins esthétiques et/ou fonctionnelles). La plaque offre ainsi une surface majoritairement continue/uniforme/sans raccords, esthétique et d'entretien facile. La plaque peut le cas échant être munie de revêtements de décoration ou fonctionnels de faible épaisseur (notamment de l'ordre de quelques dizaines de nanomètres à quelques centaines de microns, voire plus), par exemple en émail, peinture, couches minces, etc, comme précisé ultérieurement, ou peut éventuellement être décorée par sablage ou gravure, etc..

Lorsque l'article est un meuble ou plan de travail, la plaque vitrocéramique peut présenter en particulier une surface (longueur par largeur de sa face de plus grandes dimensions) supérieure ou égale à 0.7 m², de préférence supérieure à 0.9 m², notamment supérieure à 1 m², voire supérieure à 2 m² De préférence dans ce cas elle présente également l'une et/ou l'autre des caractéristiques suivantes (les bornes données étant incluses): module d'Young compris entre 80 et 100 GPa (mesuré selon la norme ASTM C 1259), résistance à la flexion comprise entre 110 et 220 MPa (mesurée par test anneau sur tripode, sur une plaque de 70 mm X 70 mm X 4 mm, l'échantillon reposant sur 3 billes de 9.5 mm de diamètre positionnées au sommet d'un triangle équilatéral inscrit dans un cercle de 40 mm de diamètre, une force étant appliquée au centre de l'échantillon par un anneau de 10 mm de diamètre avec une avancée de 5 mm/min, les résultats étant interprétés avec le modèle de Weibull décrit dans : « A statistical distribution of strength of Materials », Royal Swedish Institute For Engineering Research, W. Weibull, Stockholm 1939, 1-45, la donnée obtenue, aussi appelée « facteur d'échelle », révélatrice de la contrainte moyenne à rupture et résultant du dépouillement par la méthode Weibull des mesures de module de rupture en flexion (MOR), étant exprimée en MPa), conductivité thermique inférieure à 2 W/m.K (mesurée selon la norme DIN 51936), résistance aux chocs thermiques comprise entre 250 et 700°C, densité comprise entre 2.3 et 2.7, résistance aux acides comprise entre 0 et 2 mg/cm² (mesurée selon la norme DIN12116), et résistance aux bases comprise entre 0 et 1 mg/cm² (mesurée selon la norme ISO 695).

La plaque vitrocéramique selon l'invention est avantageusement plane (ou majoritairement ou quasiment plane), et présente en particulier une planéité (hauteur entre le point le plus haut et le point le plus bas du substrat par rapport au plan moyen du substrat, à l'exception des déformations volontaires éventuelles opérées sur le substrat à des fins esthétiques ou fonctionnelles) inférieure à 0,1% de la diagonale du substrat, et de préférence inférieure à 3 mm, notamment inférieure à 2 mm, en particulier inférieure à 1 mm, voire de l'ordre de zéro, en fonction de la taille/surface/diagonale du substrat, la planéité étant mesurée à l'aide d'un ondulomètre de référence SurFlat commercialisé par la société Visuol. La plaque est généralement de forme géométrique, en particulier rectangulaire, voire carrée, voire circulaire ou ovale, etc., et présente généralement une face "supérieure" (face visible) en position d'utilisation, une autre face "inférieure" (généralement cachée, dans le châssis ou caisson du meuble incorporant ladite plaque) en position d'utilisation, et une tranche (ou chant ou épaisseur). La face supérieure est généralement plane et lisse mais peut aussi présenter au moins une zone en relief et/ou au moins une zone en creux et/ou au moins une ouverture et/ou des bords biseautés etc, ces variations de forme constituant avantageusement des variations continues de la plaque (sans changement de matériaux ou raccords). La face inférieure peut être notamment lisse ou munie de picots augmentant sa résistance mécanique et obtenus par exemple par laminage.

L'épaisseur de la plaque vitrocéramique est généralement d'au moins 2 mm, notamment d'au moins 2.5 mm, et est généralement inférieure à 30 mm, notamment inférieure à 15 mm, en particulier de l'ordre de 3 à 15 mm.

La vitrocéramique présente un coefficient de dilatation nul ou quasi-nul, en particulier inférieur à 30.10⁻⁷ K⁻¹ entre 20 et 400°C, et de préférence inférieur à 13.10⁻⁷ K⁻¹ entre 20 et 400°C, et est en particulier une vitrocéramique d'aluminosilicate de lithium. Elle peut être notamment de couleur sombre (noire, brun foncé) ou claire (blanc, crème), et peut être translucide ou opaque ou transparente selon l'usage et l'esthétique désirés. Elle peut être affinée à l'arsenic (c'est-à-dire de (verre mère de) composition comprenant de l'ordre de 0.5 % à 1.5% en poids d'oxyde d'arsenic (exprimé en As₂O₃), ou peut être non affinée à l'arsenic (en particulier présentant un taux d'oxydes d'arsenic inférieur à 0.2 %, en particulier inférieur à 0.1 %, voire nul) ou affinée à l'étain ou affinée au(x) sulfure(s), et peut être obtenue par laminage ou par flottage.

Dans la plupart des cas et de préférence selon l'invention, la plaque utilisée pour former l'article selon l'invention est monolithique et présente à la fois une épaisseur inférieure à 15 mm, un coefficient de dilatation inférieur à 30.10⁻⁷ K⁻¹ entre 20 et 400°C, et une surface supérieure ou égale à 0.7 m².

L'article selon l'invention est également formé d'éléments nécessaires à son fonctionnement, plus particulièrement nécessaires au fonctionnement de la plaque vitrocéramique précitée. Ces éléments peuvent être par exemple un ou des éléments de chauffage (par exemple des bobines à induction), un ou des systèmes d'affichage, une ou des cartes électroniques, une ou des sources lumineuses, un ou des boitiers ou interfaces de commande, un ou des capteurs, un ou des chargeurs (par exemple de téléphone, bobine d'induction, etc.) en particulier sans fils, un ou des câbles, un ou des composants sonores ou vibrants (signalant par exemple l'approche d'un objet de type casserole), etc.

Par exemple, la plaque peut être équipée d'une ou plusieurs sources lumineuses, notamment formées par des diodes électroluminescentes, et destinées par exemple à matérialiser (rendre visible) une ou des zones ou un ou des éléments ou affichages de la plaque, notamment par transmission lumineuse au travers de la plaque. Ces sources peuvent notamment permettre l'affichage de commandes (sous forme de touches, logos, voire claviers, etc.), activables par exemple par contact sur la surface de la plaque (à l'aide par exemple de capteurs situés sous la surface et pouvant également être rapportés par l'intermédiaire des connecteurs) ou à distance (notamment par communication sans fil), voire par simple mouvement de la main (par capteurs situés le cas échéant à l'extérieur et enregistrant le mouvement, par exemple par triangulation, pour le convertir, à l'aide notamment d'un algorithme et d'une interface adaptés, en l'activation d'une fonction par exemple), ou le cas échéant par la pose d'un objet déterminé à un emplacement déterminé de la plaque. La ou les sources lumineuses peuvent également permettre l'affichage de décors, ou de données diverses (affichage par exemple de pages d'ordinateurs, de recettes de cuisine, etc.) téléchargées par exemple par communication sans fil en utilisant une interface appropriée et projetées ou transmises à partir des sources lumineuses à la surface de la plaque.

La plaque peut également être équipée d'un ou plusieurs éléments de chauffage, tels que des bobines à induction, des éléments radiants, activables également de différentes façons comme décrit pour les sources lumineuses, et peut également être équipée d'interface(s) de communication avec au moins un élément adjacent (par exemple les sources lumineuses ou éléments chauffants), et/ou le cas échéant avec au moins un élément extérieur, par exemple avec un module extérieur pour une communication sans fil, la ou lesdites interfaces étant par exemple un boitier de commande, une tablette ou un écran tactile, un système de type Bluetooth, WLAN, wifi, puce RFID, Lifi, etc.

La plaque peut également être équipée d'autres éléments, tels qu'un ou des guides d'onde, ainsi que de différents autres composants, en particulier électriques et/ou électroniques comme précité, tels qu'un chargeur (par exemple de téléphone, bobine d'induction, etc.), un ou des câbles, un composant sonore ou vibrant, etc.

La plaque peut également comporter divers revêtements fonctionnels et/ou décoratifs, notamment parmi ceux généralement utilisés avec les vitrocéramiques, par exemple à base d'émail, de peinture, de couche(s) mince(s) (par exemple métallique(s), diélectrique(s), etc.), etc. Par exemple, l'une des faces peut comporter une ou des couches ou un ou des motifs en émail, à but décoratif et/ou afin de signaler un ou des éléments (afficheurs, etc.), et/ou servant de masquage (pour éviter par exemple la vision directe de sources lumineuses), et/ou pour d'autres fonctions (comme extracteur de lumière ou pour homogénéiser un éclairage, etc.). La plaque peut également être munie d'une ou de couches fonctionnelles lui conférant une ou des propriétés supplémentaires telles qu'anti-rayures, renforcement mécanique, anti-traces, anti-débordement, etc. le ou les revêtements pouvant se trouver notamment sur la face apparente ou sur la face opposée, selon le type de revêtement et la fonction recherchée.

La présente invention concerne en particulier comme article, une table ou un plan de travail ou un meuble comprenant une surface ou plateau, en particulier de grandes dimensions, formé(e) par la plaque vitrocéramique et apte à permettre en simultané ou successivement différentes activités et/ou support d'objets. Ce meuble peut être par exemple un ilot central de pièce, tel qu'un ilot de cuisine, ou tout plan ou table de travail pour différents usages, par exemple une paillasse de laboratoire, une table ou une table basse, ou encore un meuble de type console, crédence, un meuble de rangement, un comptoir, etc.

L'article selon l'invention est fabriquée notamment à partir de la plaque vitrocéramique, en particulier de grandes dimensions, obtenue par céramisation, en la posant et la fixant, par exemple par collage (double face, silicone, bande magnétique, etc.), le cas échéant sur un caisson ou des pieds supports et en lui associant, au préalable ou pendant son montage, le support mobile et les éléments nécessaires à son fonctionnement, positionnés (au moins pour partie d'entre eux), sur le support mobile.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques, déjà découpées ou non, sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante.

Afin d'obtenir des plaques de grandes dimensions selon l'invention, en particulier des plaques de surface supérieure à 0.7 m², on réduit préférentiellement, pendant le cycle de céramisation, la vitesse de passage d'au moins 25%, de préférence d'au moins 50%, ou on augmente la longueur de l'arche de céramisation ou le temps de séjour dans ladite arche d'au moins 25%, de préférence d'au moins 50%, par rapport respectivement à la vitesse, la longueur ou le temps de séjour optimaux ou usuels pour obtenir un substrat en vitrocéramique de surface inférieure à 0.4 m².

Le cas échéant, le procédé comprend également une opération de découpe (généralement avant céramisation), par exemple par jet d'eau, traçage mécanique à la molette, etc. suivie par une opération de façonnage (meulage, biseautage,...). Le procédé peut également comprendre une étape de laminage ou effondrement pour former des reliefs particuliers.

D'autres détails et caractéristiques avantageuses ressortiront ci-après de la description de modes de réalisation non limitatifs de l'invention en référence aux dessins annexés dans lesquels :
- La figure 1 représente une vue schématique en perspective d'un l'article selon un premier mode de réalisation de l'invention dans une première position où les éléments permettant son fonctionnement sont cachés et peuvent être activés;
- La figure 2 représente une vue partielle schématique de côté (le pan latéral du meuble et celui du tiroir étant ôtés de ce côté) de l'article de la figure 1 dans la première position du support portant les éléments;
- La figure 3 représente une vue partielle schématique de côté similaire à celle de la figure 2, à la différence que le support se trouve cette fois dans sa seconde position où les éléments sont accessibles et désactivés.
- la figure 4 représente une vue schématique en perspective d'un l'article selon un second mode de réalisation de l'invention dans une position du support où les éléments permettant le fonctionnement de l'article sont accessibles et (au moins pour une partie d'entre eux) désactivés.

Les mêmes références sont utilisées dans l'ensemble des figures pour désigner les mêmes types d'éléments, tous les éléments n'étant pas représentés à la même échelle pour une meilleure compréhension des figures.

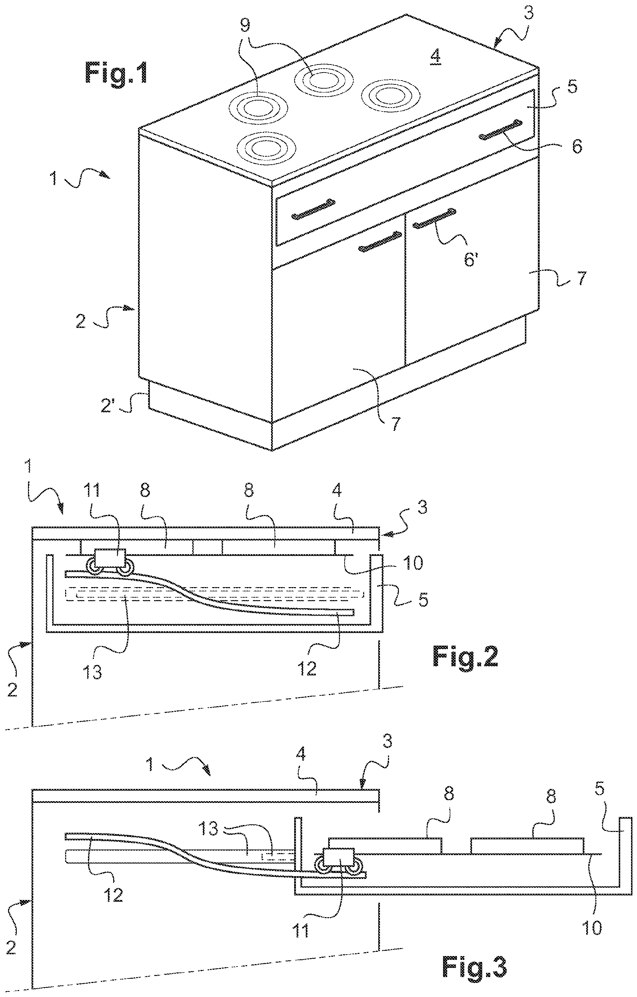

Dans les figures 1 à 3, l'article selon l'invention est un meuble (1), par exemple un ilot de cuisine, destiné à différents usages (successifs ou simultanés), dont la préparation et la consommation de plats, le support d'objets, la cuisson d'aliments, etc, ce meuble étant formé d'un caisson (2) de 240 cm (longueur) X 120 cm (profondeur) X 95 cm (hauteur, socle (2') du caisson compris) surmonté d'un plan de travail (3) entièrement (c'est-à-dire sur toute sa surface) formé d'un substrat monolithique (4) en vitrocéramique de 2.88 m² de surface. Ce substrat est par exemple une plaque du type de celle commercialisée sous la référence KeraBlack+ par la société Eurokera, cette plaque présentant une face supérieure lisse et une face inférieure munie de picots, et une épaisseur de 6 mm. Ce substrat est par exemple obtenu en procédant comme dans la demande de brevet WO2012156444 mais en réduisant la vitesse de passage dans l'arche de céramisation de 50%, le substrat en vitrocéramique obtenu présente une planéité de moins de 2 mm.

L'article comprend également un tiroir (5), de 238 cm (longueur) X 100 cm (profondeur) X 5 cm (hauteur), muni de poignées (6), et des portes (7), munies également de poignées (6'), ainsi que des éléments (8) pour le fonctionnement, le cas échéant, de la plaque, ces éléments étant notamment dans le cas présent des éléments de chauffage pour la cuisson d'aliments, par exemple des inducteurs, disposés sous la plaque. L'emplacement des éléments chauffants peut le cas échéant être signalé par des décors (9), par exemple en émail, à la surface de la plaque, délimitant au besoin les zones de chauffe (dans la figure 1, quatre zones de chauffe sont ainsi représentées).

Les éléments de chauffage sont positionnés sur un support (10) sous forme d'un plateau monté, par exemple par l'intermédiaire d'un système de roulement et/ou chariot et/ou galets et/ou patins (11), sur un rail de guidage (12) en forme de S placé à l'intérieur du tiroir (en particulier sur chacune des parois latérales en regard), le tiroir étant lui-même monté sur une ou des glissières (13), par exemple de type télescopiques et situées le long de chacun des bords latéraux du tiroir.

Lors de l'actionnement du tiroir, le support, sur lequel les éléments chauffants et le cas échéant d'autres éléments pour le fonctionnement de la plaque ou de l'article se trouvent, se déplace le long du rail (12) et passe d'une première position (figure 2) où les éléments se trouvent en regard de la face inférieure de la plaque et, pour au moins certains d'entre eux (par exemple les éléments chauffants), contre ladite plaque/à une distance nulle de ladite plaque, ou la cas échéant pour d'autres (par exemple une tablette tactile ou un chargeur) à au moins 1 mm et moins de 10 cm de ladite plaque (cette distance étant mesurée perpendiculairement à ladite face et entre ladite face et l'extrémité la plus proche de l'élément considéré) et peuvent être activés, à une seconde position du support (figure 3), dans laquelle l'ensemble du support est déplacé à la fois horizontalement sur une distance d'au moins 50 cm, et verticalement sur une distance d'au moins 2 mm, de préférence d'au moins 1 cm par rapport à la plaque, et les éléments (8) sont désactivés et accessibles, les éléments ayant été désactivés pendant la course du plateau par un dispositif de sécurité (non représenté mais se situant par exemple à l'arrière du tiroir ou du support), par exemple par l'action d'un coupe-circuit et/ou par le désamorçage d'un contacteur.

Lorsque le tiroir est repoussé, le support en position basse retourne progressivement en position haute à l'intérieur du meuble puis quand le tiroir arrive en butée dans sa position initiale, un système de verrouillage (non représenté) peut venir bloquer l'ensemble dans sa position de fonctionnement et le contacteur, par exemple, peut assurer à nouveau le fonctionnement des éléments sur le plateau par l'amenée du courant électrique, ledit contacteur n'étant activé que lorsque l'avant du tiroir est en contact avec le meuble (ou le support est dans sa première position).

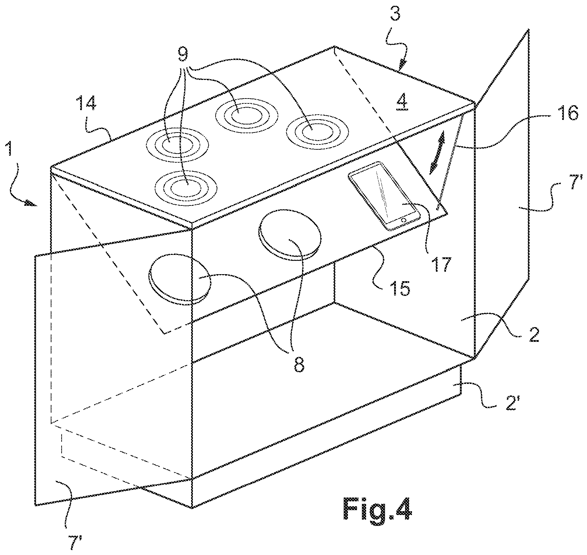

Dans le mode de réalisation représenté en figure 4, le meuble (1) est également formé comme précédemment d'un caisson (2) similaire à celui des figures précédentes, également surmonté d'un plan de travail (3) entièrement formé d'un substrat monolithique (4) en vitrocéramique comme précédemment, et muni d'éléments de chauffage (8) tels que des inducteurs, disposés sous la plaque, pour la cuisson d'aliments, l'emplacement des éléments chauffants étant signalé par des décors (9) en face supérieure de la plaque, le meuble étant cette fois pourvu de deux portes (7') et d'un support, portant au moins les éléments de chauffage précités, mobile, cette fois en rotation, par exemple autour de son bord (14) opposé à celui (15) destiné à être écarté de la plaque et par lequel il est prévu l'accès d'un opérateur aux éléments situés sur le support (comme représenté), ou localement autour d'un axe approprié, à la façon par exemple d'une trappe sous la plaque.

Le support peut être bloqué dans sa première position, où les éléments sur le support se trouvent en regard de la face inférieure de la plaque et, pour au moins certains d'entre eux (par exemple les éléments chauffants), contre ladite plaque/à une distance nulle de ladite plaque, ou la cas échéant pour d'autres (par exemple une tablette tactile (17) ou un chargeur) à au moins 1 mm et moins de 10 cm de ladite plaque, par l'intermédiaire de loquet(s) (ou système(s) de verrouillage) maintenant ledit support contre la plaque. En ouvrant les portes du meuble et retirant le(s) loquet(s), le support bascule alors (comme indiqué par la flèche) vers le bas et passe dans une seconde position (illustrée sur la figure 4) où l'extrémité (15) du support est déplacée (essentiellement verticalement) sur une distance de 20 cm (et avec un angle de rotation de 20 °), et les éléments (8) sont désactivés et accessibles, ces éléments étant par exemple désactivés lors du déverrouillage et déplacement du support par le désamorçage d'un contacteur (non représenté). Le cas échéant le support peut également être muni d'une béquille (16) (système de sécurité supplémentaire) permettant au besoin de maintenir le support dans sa deuxième position.

Le support peut également comprendre d'autres éléments, tels qu'un écran tactile ou une tablette (17), ces éléments pouvant également être désactivés lors du basculement du support ou non.

Les meubles représentés dans les figures précédentes peuvent servir pour différents usages, tels que l'écriture, le support d'objets, l'utilisation comme table de cuisine (permettant notamment de manger ou déposer des récipients de cuisson le cas échéant chauds, etc), etc. Le cas échéant, le caisson peut également être remplacé par des pieds supports (l'équipement sous le plan de travail pouvant être caché par un coffrage localisé de quelques centimètres d'épaisseur sous la plaque) à l'image d'une table.

L'équipement selon l'invention peut notamment être utilisé avec avantages pour réaliser une nouvelle gamme de meubles multi-usages plus faciles à réparer malgré le cas échéant la taille et le poids de certains de leurs composants.

## Revendications

1. Article (1), notamment à usage domestique et/ou mobilier, en particulier plan de travail (4) ou meuble, formé d'au moins une plaque vitrocéramique et d'éléments (8) pour son fonctionnement, **caractérisé en ce qu'**au moins l'un desdits éléments (8) est positionné sur un support (10) bi- ou tridimensionnel mobile couplé à un dispositif de sécurité de sorte que, dans une première position du support (10), edit élément (8) se trouve en regard d'une face de la plaque (4) à une distance d'au plus 10 cm de la plaque (4) et peut être activé, et dans une seconde position du support (10), obtenue par mouvement de celui-ci, dans laquelle au moins l'une des extrémités du support (10) est déplacée de, ou se trouve à, une distance d'au moins 2 mm par rapport à la plaque (4) perpendiculairement à celle-ci, et est déplacée de, ou se trouve à, une distance d'au moins 5 cm par rapport à sa première position, ledit élément (8) est désactivé.

2. Article (1) selon la revendication 1, **caractérisé en ce qu'**au moins une partie des éléments (8), voire tous les éléments (8), utiles au fonctionnement de la plaque (4) ou de l'article, sont positionnés sur le support (10) mobile, lesdits éléments se trouvant en regard d'une face de la plaque (4), en particulier de sa face inférieure, à une distance, perpendiculairement à ladite face et entre ladite face et l'extrémité la plus proche de chacun desdits éléments (8), d'au plus 10 cm de la plaque, dans ladite première position du support (10) et **en ce que** au moins une partie desdits éléments (8) sont désactivés dans ladite seconde position du support (10), avantageusement par l'action du dispositif de sécurité .

3. Article (1) selon l'une des revendications 1 ou 2, **caractérisé en ce que** le support (10) mobile se présente sous forme d'un plateau ou d'un caisson ou boitier, situé préférentiellement sous la plaque (4), le support (10) étant mobile en translation et/ou rotation, horizontalement et/ou verticalement, de façon à l'éloigner au moins en partie de la plaque (4) dans la seconde position.

4. Article (1) selon l'une des revendications 1 à 3, **caractérisé en ce que**, dans la première position du support (10), le ou les éléments situés sur le support (10) se trouvent en regard de la face inférieure de la plaque (4) à une distance d'au plus 4 cm, de préférence de moins de 1 cm, avantageusement inférieure à 5 mm, de la plaque, et dans la seconde position du support (10), au moins l'une des extrémités du support (10), voire l'ensemble du support (10), se trouve à une distance d'au moins 5 cm, en particulier d'au moins 10 cm, de préférence d'au moins 15 cm, notamment d'au moins 50 cm, par rapport à sa première position, en particulier se trouve verticalement à une distance d'au moins 10 cm de sa première position, par exemple par rotation ou abaissement du support (10), et/ou se trouve verticalement à une distance d'au moins 2 mm de la plaque (4) et horizontalement à une distance d'au moins 5 cm de sa première position, par exemple par abaissement puis translation du support (10).

5. Article (1) selon l'une des revendications 1 à 4, **caractérisé en ce que** le dispositif de sécurité est formé d'au moins un coupe circuit, manuel ou automatique, déclenché notamment par le mouvement du plateau et/ou par un court-circuit, et/ou d'un contacteur et/ou d'un interrupteur.

6. Article (1) selon l'une des revendications 1 à 5, **caractérisé en ce que** le mouvement du support (10) se fait suivant un axe de rotation, situé par exemple le long d'un bord opposé à celui destiné à être écarté de la plaque, avec un angle d'au moins 2.5°, notamment d'au moins 10°, ou d'au moins 20°, voire d'au moins 30°, en particulier d'au moins 45°, ou d'au moins 60°, par rapport à la première position du support (10), ou suivant des rails de guidage ou glissières, permettant le cas échéant un mouvement vertical et horizontal, par exemple de forme approximativement en S.

7. Article (1) selon l'une des revendications 1 à 6, **caractérisé en ce qu'**il comprend, ou **en ce que** la plaque (4) est couplée à, un dispositif de sécurité, tel qu'un frein pour empêcher le pincement de l'opérateur ou un mouvement trop brutal du support (10) lors de son actionnement, ou tel qu'une ou plusieurs butées ou un ou plusieurs loquets ou un ou plusieurs dispositifs de blocage pour le support (10) dans au moins l'une de ses positions d'utilisation.

8. Article (1) selon l'une des revendications 1 à 7, **caractérisé en ce que** la plaque (4) vitrocéramique occupe plus de 50% de la surface de la face où elle se trouve, de préférence plus de 80%, en particulier plus de 90% voire toute la surface d'une face, en particulier la face supérieure, dudit l'article, ladite plaque (4) reposant en particulier sur au moins un caisson ou un ou des pieds supports, sans joint intercalaire.

9. Article (1) selon l'une des revendications 1 à 8, **caractérisé en ce que** la plaque (4) est une plaque monolithique présentant une épaisseur inférieure à 15 mm, un coefficient de dilatation inférieur à 30.10⁻⁷ K⁻¹ entre 20 et 400°C, et une surface supérieure ou égale à 0.7 m²

10. Article (1) selon l'une des revendications 1 à 9, **caractérisé en ce que** ledit article (1) ou la plaque (4) comprend comme élément(s) utile(s) à son fonctionnement au moins l'un des éléments (8) suivants : élément chauffant, source lumineuse, composant sonore ou vibrant, système d'affichage, carte électronique, boitier ou interface de commande ou capteur.

11. Article (1) selon l'une des revendications 1 à 10, **caractérisé en ce que** l'article est une table ou un plan de travail ou un meuble, par exemple un ilot central de pièce, un ilot de cuisine, une paillasse de laboratoire, une table basse, une console, une crédence, un meuble de rangement ou un comptoir.

## Patentansprüche

1. Gegenstand (1), insbesondere für den Heim- und/oder Möblierungsgebrauch, im Besonderen eine Arbeitsfläche (4) oder ein Möbelstück, der aus mindestens einem Glaskeramikkochfeld und Elementen (8) für seinen Betrieb ausgebildet ist, **dadurch gekennzeichnet, dass** mindestens eines der Elemente (8) auf einem zwei- oder dreidimensionalen bewegbaren Träger (10) positioniert ist, der mit einer Sicherheitsvorrichtung gekoppelt ist, sodass sich das Element (8) in einer ersten Position des Trägers (10) gegenüber einer Fläche des Kochfelds (4) in einem Abstand von höchstens 10 cm von dem Kochfeld (4) befindet und aktiviert werden kann, und in einer zweiten Position des Trägers (10), die durch eine Bewegung von diesem erhalten wird, bei der mindestens eines der Enden des Trägers (10) um einen Abstand von mindestens 2 mm relativ zu dem Kochfeld (4) senkrecht zu diesem verschoben wird oder sich befindet und um einen Abstand von mindestens 5 cm relativ zu seiner ersten Position verschoben wird oder sich befindet, das Element (8) deaktiviert ist.

2. Gegenstand (1) nach Anspruch 1, **dadurch gekennzeichnet, dass** mindestens ein Teil der Elemente (8) oder sogar alle Elemente (8), die für den Betrieb des Kochfelds (4) oder des Gegenstands nützlich sind, auf dem bewegbaren Träger (10) positioniert sind, wobei sich die Elemente gegenüber einer Fläche des Kochfelds (4) befinden, im Besonderen seiner unteren Fläche, in einem Abstand senkrecht zu der Fläche und zwischen der Fläche und dem Ende, das jedem der Elemente (8) am nächsten liegt, von höchstens 10 cm zu dem Kochfeld in der ersten Position des Trägers (10), und **dass** mindestens ein Teil der Elemente (8) in der zweiten Position des Trägers (10) deaktiviert ist, vorteilhafterweise durch die Wirkung der Sicherheitsvorrichtung.

3. Gegenstand (1) nach einem der Ansprüche 1 oder 2,
**dadurch gekennzeichnet, dass** der bewegbare Träger (10) in Form einer Scheibe oder eines Kastens oder eines Gehäuses vorliegt, vorzugsweise unter dem Kochfeld (4) gelegen, wobei der Träger (10) horizontal und/oder vertikal translatorisch und/oder rotierend bewegbar ist, um ihn in der zweiten Position mindestens teilweise von dem Kochfeld (4) wegzurücken.

4. Gegenstand (1) nach einem der Ansprüche 1 bis 3,
**dadurch gekennzeichnet, dass** sich das oder die Elemente, die auf dem Träger (10) gelegen sind, in der ersten Position des Trägers (10) gegenüber der unteren Fläche des Kochfelds (4) in einem Abstand von höchstens 4 cm, vorzugsweise weniger als 1 cm, vorteilhafterweise weniger als 5 mm, von dem Kochfeld befinden, und sich in der zweiten Position des Trägers (10) mindestens eines der Enden des Trägers (10) oder sogar der gesamte Träger (10) in einem Abstand von mindestens 5 cm, im Besonderen mindestens 10 cm, vorzugsweise mindestens 15 cm, insbesondere mindestens 50 cm relativ zu seiner ersten Position befindet, sich im Besonderen vertikal in einem Abstand von mindestens 10 cm von seiner ersten Position befindet, zum Beispiel durch Rotation oder Absenken des Trägers (10), und/oder sich vertikal in einem Abstand von mindestens 2 mm von dem Kochfeld (4) und horizontal in einem Abstand von mindestens 5 cm von seiner ersten Position befindet, zum Beispiel durch Absenken, dann Translation des Trägers (10).

5. Gegenstand (1) nach einem der Ansprüche 1 bis 4,
**dadurch gekennzeichnet, dass** die Sicherheitsvorrichtung aus mindestens einem Ausschalter, manuell oder automatisch, der insbesondere durch die Bewegung des Kochfelds und/oder durch einen Kurzschluss ausgelöst wird, und/oder einem Schütz und/oder einem Unterbrecher ausgebildet ist.

6. Gegenstand (1) nach einem der Ansprüche 1 bis 5,
**dadurch gekennzeichnet, dass** die Bewegung des Trägers (10) entlang einer Rotationsachse, die zum Beispiel entlang einer Kante gelegen ist, die derjenigen gegenüberliegt, die dazu bestimmt ist, von dem Kochfeld entfernt zu werden, mit einem Winkel von mindestens 2,5°, insbesondere mindestens 10° oder mindestens 20° oder sogar mindestens 30°, im Besonderen mindestens 45° oder mindestens 60° relativ zu der ersten Position des Trägers (10), oder entlang von Führungs- oder Gleitschienen erfolgt, die gegebenenfalls eine vertikale und horizontale Bewegung ermöglichen, zum Beispiel ungefähr S-förmig.

7. Gegenstand (1) nach einem der Ansprüche 1 bis 6,
**dadurch gekennzeichnet, dass** er eine Sicherheitsvorrichtung umfasst oder **dass** das Kochfeld (4) mit dieser gekoppelt ist, zum Beispiel eine Bremse zum Verhindern des Einklemmens des Bedieners oder einer zu plötzlichen Bewegung des Trägers (10) während seiner Betätigung oder zum Beispiel einen oder mehrere Anschlägen oder eine oder mehrere Verriegelungen oder eine oder mehrere Blockiervorrichtungen für den Träger (10) in mindestens einer ihrer Benutzungspositionen.

8. Gegenstand (1) nach einem der Ansprüche 1 bis 7,
**dadurch gekennzeichnet, dass** das Glaskeramikkochfeld (4) mehr als 50 % der Oberfläche der Fläche einnimmt, auf der es sich befindet, vorzugsweise mehr als 80 %, im Besonderen mehr als 90 % oder sogar die gesamte Oberfläche einer Fläche, im Besonderen die obere Fläche, des Gegenstands, wobei das Kochfeld (4) im Besonderen auf mindestens einem Kasten oder einem oder mehreren Trägerfüßen ohne Zwischenverbindung ruht.

9. Gegenstand (1) nach einem der Ansprüche 1 bis 8,
**dadurch gekennzeichnet, dass** das Kochfeld (4) ein monolithisches Kochfeld ist, das eine Dicke von weniger als 15 mm, einen Ausdehnungskoeffizienten von weniger als 30,10⁻⁷ K⁻¹ zwischen 20 und 400 °C und eine Oberfläche aufweist, die größer als oder gleich 0,7 m² ist.

10. Gegenstand (1) nach einem der Ansprüche 1 bis 9,
**dadurch gekennzeichnet, dass** der Gegenstand (1) oder das Kochfeld (4) als für seinen Betrieb nützliche(s) Element(e) mindestens eines der folgenden Elemente (8) umfasst: Heizelement, Lichtquelle, Ton- oder Vibrationskomponente, Anzeigesystem, elektronische Karte, Steuerungsgehäuse oder -schnittstelle oder Sensor.

11. Gegenstand (1) nach einem der Ansprüche 1 bis 10,
**dadurch gekennzeichnet, dass** der Gegenstand ein Tisch oder eine Arbeitsfläche oder ein Möbelstück ist, zum Beispiel eine zentrale Rauminsel, eine Kücheninsel, eine Labortischplatte, ein Couchtisch, ein Wandtisch, eine Anrichte, ein Stauraummöbel oder eine Theke.

## Claims

1. Item (1), in particular for domestic and/or furnishing use, particularly a worktop or furniture unit (4), made up of at least one glass ceramic sheet and elements (8) for its operation, at least one of said elements (8) being positioned on a two-dimensional or three-dimensional mobile support (10) coupled to a safety device, so that, when the support (10) is in a first position, said element (8) lies facing one face of the sheet (4) at a distance of at most 10 cm from the sheet (4) and can be activated, and, when the support (10) is in a second position, obtained by a movement thereof, in which position at least one of the ends of the support (10) is moved by, or lies at, a distance of at least 2 mm with respect to the sheet (4) and perpendicular thereto and is moved by, or lies at, a distance of at least 5 cm with respect to its first position, said element (8) is deactivated.

2. Item (1) as claimed in claim 1, **characterized in that** at least some of the elements (8), or even all the elements (8), of use in the operation of the sheet (4) or of the item are positioned on the mobile support (10), said elements lying facing one face of the sheet (4), particularly the lower face thereof, at a distance, perpendicular to said face and between said face and the nearest end of each of said elements (8), of at most 10 cm from the sheet when the support (10) is in said first position, and **in that** at least some of said elements (8) are deactivated when the support (10) is in said second position, advantageously through the action of the safety device.

3. Item (1) as claimed in either of claims 1 and 2, **characterized in that** the mobile support (10) takes the form of a plate or of a casing or housing, preferably situated beneath the sheet (4), the support (10) being capable of translational and/or rotational movement, horizontally and/or vertically, so as to move it at least partially away from the sheet (4) in the second position.

4. Item (1) as claimed in one of claims 1 to 3, **characterized in that**, when the support (10) is in the first position, the element(s) situated on the support (10) lie facing the lower face of the sheet (4) at a distance of at most 4 cm, preferably under 1 cm, advantageously less than 5 mm, from the sheet and, when the support (10) is in the second position, at least one of the ends of the support (10), or even the entirety of the support, lies at a distance of at least 5 cm, in particular of at least 10 cm, as a particular preference of at least 15 cm, in particular of at least 50 cm, in relation to its first position, in particular lies vertically at a distance of at least 10 cm from its first position, for example by rotation or lowering of the support (10), and/or lies vertically at a distance of at least 2 mm from the sheet (4) and horizontally at a distance of at least 5 cm from its first position, for example by lowering followed by a translational movement of the support (10).

5. Item (1) as claimed in one of claims 1 to 4, **characterized in that** the safety device is formed of at least one manual or automatic circuit breaker, triggered in particular by the movement of the plate and/or by a short circuit and/or of a contactor and/or of a breaker switch.

6. Item (1) as claimed in one of claims 1 to 5, **characterized in that** the movement of the support (10) is about an axis of rotation, situated, for example, along an opposite edge to the edge intended to be moved away from the sheet, with an angle of at least 2.5°, in particular of at least 10°, or of at least 20°, or even of at least 30°, particularly of at least 45°, or of at least 60°, with respect to the first position of the support (10), or along guide rails or slides, where appropriate allowing a movement that is vertical and horizontal, for example approximately S-shaped.

7. Item (1) as claimed in one of claims 1 to 6, **characterized in that** it comprises, or **in that** the sheet (4) is coupled to, a safety device, such as a brake, to prevent the operator from becoming trapped or prevent excessively sharp movement of the support (10) as it is actuated, or such as one or more end stops or one or more latches or one or more devices for immobilizing the support (10) in at least one of its positions of use.

8. Item (1) as claimed in one of claims 1 to 7, **characterized in that** the glass ceramic sheet (4) occupies more than 50% of the surface of the face on which it is located, preferably more than 80%, in particular more than 90%, or even all of the surface area of one face, particularly the top face, of said item, said sheet (4) in particular resting on at least one casing or one or more support legs, without a seal in between.

9. Item (1) as claimed in one of claims 1 to 8, **characterized in that** the sheet (4) is a monolithic sheet having a thickness of less than 15 mm, an expansion coefficient of less than 30x10⁻⁷ K⁻¹ between 20°C and 400°C, and a surface area of greater than or equal to 0.7 m².

10. Item (1) as claimed in one of claims 1 to 9, **characterized in that** said item (1) or sheet (4) comprises, by way of element(s) of use in its operation, at least one of the following elements (8): heating element, light source, audible or vibrating component, display system, electronic board, control interface or unit, or sensor.

11. Item (1) as claimed in one of claims 1 to 10, **characterized in that** the item is a table or a worktop or a furniture unit, for example a central island unit in a room, a kitchen island unit, a lab table, a coffee table, a side-table, a credenza, an item of storage furniture, or a counter top.
